# EUROPEAN PATENT APPLICATION

(11) **EP 3 806 090 A1**
(43) Date of publication of application: **14.04.2021**
(21) Application number: 19810077.8
(22) Date of filing: 13.02.2019
(51) Int. Cl.: G10L 15/22

(54) **INFORMATION PROCESSING DEVICE, INFORMATION PROCESSING METHOD, AND PROGRAM**

(30) Priority: 31.05.2018 JP 2018104737
(71) Applicant: Sony Corporation, 108-0075 Tokyo (JP)
(72) Inventor: UESAKA, Toshimitsu, Tokyo 108-0075 (JP)
(74) Representative: 2SPL Patentanwälte PartG mbB
(86) International application number: PCT/JP2019/005109
(87) International publication number: WO 2019/230065

(57) **Abstract**

Advice information indicating an action that a user should take to succeed in retried speech recognition is generated and presented. An information processing apparatus therefore includes a speech recognition success/failure determination unit that determines success or failure of speech recognition of a user's speech input, a normal response generation unit that generates normal response information to be presented to the user in a case where it is determined in the determination that the speech recognition has succeeded, and an advice information generation unit that generates advice information to be presented to the user in a case where it is determined in the determination that the speech recognition has failed due to a surrounding environment of the user.

## Description

### TECHNICAL FIELD

The present technology relates to a technical field related to an information processing apparatus, an information processing method, and a program that determine success or failure of speech recognition and generate advice information in accordance with the determination.

### BACKGROUND ART

There are technologies for estimating and presenting, when speech recognition has failed, a cause of the recognition failure, and technologies for prompting reutterance in a quiet place when a loud noise has been detected. For example, Patent Document 1 shown below describes making a notification of a cause of a speech recognition failure by determining a way of utterance such as an utterance volume and an utterance speed and estimating a noise.

Furthermore, Patent Document 2 describes determining a main cause of a speech recognition failure by focusing on an utterance volume, a signal-noise ratio (SNR), a length of a speech section, omission of the beginning of speech, omission of the end of speech, and the like.

### CITATION LIST

### PATENT DOCUMENT

Patent Document 1: Japanese Patent Application Laid-Open No. 2008-256802
Patent Document 2: Japanese Patent Application Laid-Open No. 2010-186126

### SUMMARY OF THE INVENTION

### PROBLEMS TO BE SOLVED BY THE INVENTION

However, those technologies have been insufficient to ensure success in the next speech recognition. For example, a user may recognize the cause of failure of the speech recognition, but may not know how to deal with it, or when a quiet place is designated, a user may not know any specific place.

It is therefore an object of an imaging device of the present technology to generate and present advice information indicating an action that a user should take to succeed in retried speech recognition.

### SOLUTIONS TO PROBLEMS

An information processing apparatus according to the present technology includes a speech recognition success/failure determination unit that determines success or failure of speech recognition of a user's speech input, a normal response generation unit that generates normal response information to be presented to the user in a case where it is determined in the determination that the speech recognition has succeeded, and an advice information generation unit that generates advice information to be presented to the user in a case where it is determined in the determination that the speech recognition has failed due to a surrounding environment of the user.

In a case where it is determined that the speech recognition has failed due to the surrounding environment of the user, advice information to be presented for success in the next speech recognition is generated. This makes it possible to present advice information that allows the user to take an appropriate action.

The information processing apparatus described above may include a response control unit that selects the normal response information in a case where a result indicating that the speech recognition has succeeded has been acquired as a result of the determination, and selects the advice information in a case where a result indicating that the speech recognition has failed has been acquired.

That is, response information (either normal response information or advice information) is selected in accordance with the success or failure of the speech recognition.

The information processing apparatus described above may include a response information presentation unit that presents information selected by the response control unit to the user.

That is, the response information in accordance with the success or failure of the speech recognition is presented to the user.

The information processing apparatus described above may perform, in a case where the speech recognition has failed, cause determination processing for determining a cause of failure.

The cause of the speech recognition failure of the user's speech input is identified.

The cause determination processing of the information processing apparatus described above may determine whether the failure is due to a way of utterance or due to noise.

With this arrangement, it is determined whether the cause of failure of the speech recognition is due to the way of utterance that can presumably be resolved by retry or due to noise.

In a case where it is determined that the failure is due to noise, the cause determination processing of the information processing apparatus described above may further determine whether the noise is transient noise or non-transient noise.

In a case where the cause of failure of the speech recognition is noise, determining a characteristic of the noise makes it possible to appropriately determine which of advice information requesting for retry of a speech input or another type of advice information is to be presented.

The cause determination processing of the information processing apparatus described above may use a classifier.

Using the classifier makes it possible to automatically estimate the cause of failure of the speech recognition.

In the information processing apparatus described above, the classifier may be generated by machine learning.

Machine learning is used as a specific processing method for generating a classifier.

The cause determination processing of the information processing apparatus described above may use map data to determine a cause of failure.

With this arrangement, not only information regarding noise and the like obtained by analysis of speech data but also map data are used to estimate a cause of the noise and the like and determine the cause of the failure.

The advice information generation unit in the information processing apparatus described above may generate advice information that includes information for presenting a place to retry a speech input.

With this arrangement, information for success in the next speech recognition is presented to the user.

In the information processing apparatus described above, in a case where the cause of failure of the speech recognition is non-transient noise, the place for retry may be set to an alternative location different from a current location.

With this arrangement, an appropriate candidate location to move to for success in the next speech recognition is presented to the user as an alternative location.

In the information processing apparatus described above, in a case where the cause of failure of the speech recognition is transient noise, the place for retry may be set to a current location.

With this arrangement, advice information for suggesting an appropriate action that the user should take to succeed in the next speech recognition is generated.

In the information processing apparatus described above, in a case where it is determined that a current location of the user is in an utterance restriction area, the place for retry may be set to an alternative location different from the current location.

With this arrangement, advice information for success in the next speech recognition is generated, and at the same time, advice information is generated so that the user may not take an inappropriate action such as making a speech input in the utterance restriction area.

In the information processing apparatus described above, the place for retry may be determined by using map data.

When an appropriate place (alternative location) to retry a speech input is determined, map data is used so that closeness to the alternative location, loudness of noise at the alternative location, and the like are taken into consideration.

In the information processing apparatus described above, the place for retry may be determined by using information regarding records of other users.

When an appropriate place (alternative location) to retry a speech input is determined, information regarding records of other users is used to generate advice information in view of a geographical situation (surrounding environment) where a speech input is actually likely to succeed.

The information processing apparatus described above may include a microphone that acquires a speech of the user.

In a case where a user terminal provided with a microphone includes a speech recognition success/failure determination unit, a normal response generation unit, and an advice information generation unit, the user terminal can execute processing of acquiring a speech of a user, determining success or failure of speech recognition, and generating, in accordance with the determination, either normal response information or advice information.

An information processing method according to the present technology includes a speech recognition success/failure determination procedure that determines success or failure of speech recognition of a user's speech input, a normal response generation procedure that generates normal response information to be presented to the user in a case where it is determined in the determination that the speech recognition has succeeded, and an advice information generation procedure that generates advice information to be presented to the user in a case where it is determined in the determination that the speech recognition has failed due to a surrounding environment of the user, the procedures being executed by an information processing apparatus.

This makes it possible to present to the user advice information indicating an action that the user should take to succeed in retried speech recognition.

A program according to the present technology causes an information processing apparatus to execute the procedures of the method described above.

### EFFECTS OF THE INVENTION

According to the present technology, it is possible to generate and present advice information indicating an action that a user should take to succeed in retried speech recognition.

Note that the effects described here are not necessarily restrictive, and the effects of the invention may be any one of the effects described in the present disclosure.

### BRIEF DESCRIPTION OF DRAWINGS

Fig. 1 is an explanatory diagram of an information processing system according to an embodiment of the present technology.
Fig. 2 is a functional block diagram of the information processing system.
Fig. 3 is a diagram illustrating an example of functional configurations of a server device and a user terminal.
Fig. 4 is a diagram illustrating an example of an advice information generation unit.
Fig. 5 is an explanatory diagram of a hardware configuration of an information processing apparatus.
Fig. 6 is a flowchart of overall processing.
Fig. 7 is a flowchart of advice information generation processing.
Fig. 8 is an explanatory diagram of an example of determining a cause of failure of speech recognition by integrating a plurality of DNN outputs.
Fig. 9 is a flowchart of a reutterance validity determination.

### MODE FOR CARRYING OUT THE INVENTION

An embodiment will be described below in the following order with reference to the accompanying drawings.
<1. System configuration>
<2. Configuration of information processing apparatus>
<3. Each piece of processing>
   [3-1. Overall processing]
   [3-2. Advice information generation processing]
<4. Modified example>
<5. Summary>
<6. Present technology>

### <1. System configuration>

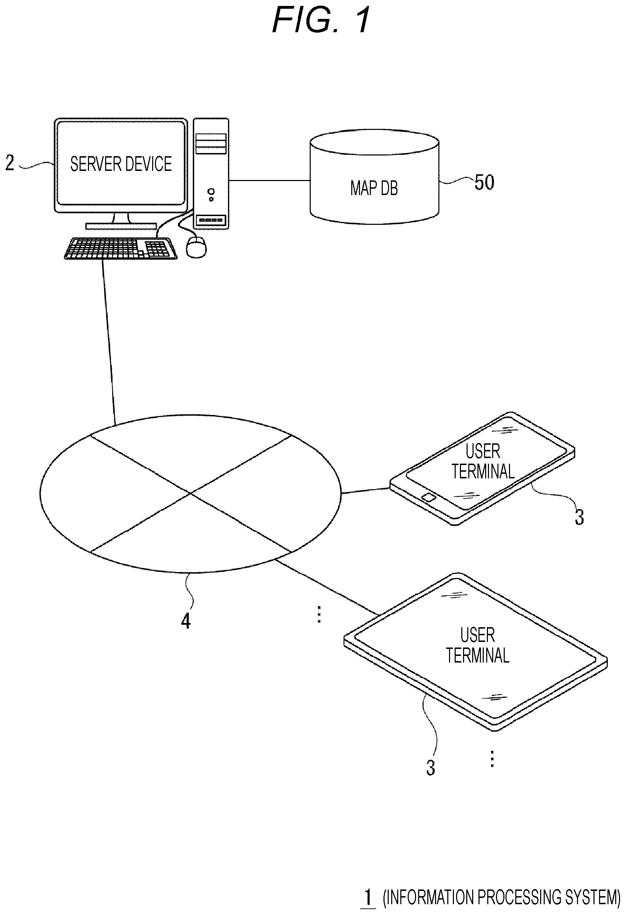

A configuration of an entire system including an information processing apparatus that performs each piece of processing such as generation and presentation of advice information to a user will be described with reference to Fig. 1.

An information processing system 1 presents, when user speech recognition has failed, advice information for success in the next speech recognition. The information processing system 1 may be in various forms. Here, an example thereof will be described.

The information processing system 1 includes a server device 2 as a specific example of the information processing apparatus in the claims, a user terminal 3 carried by a user, and a communication network 4.

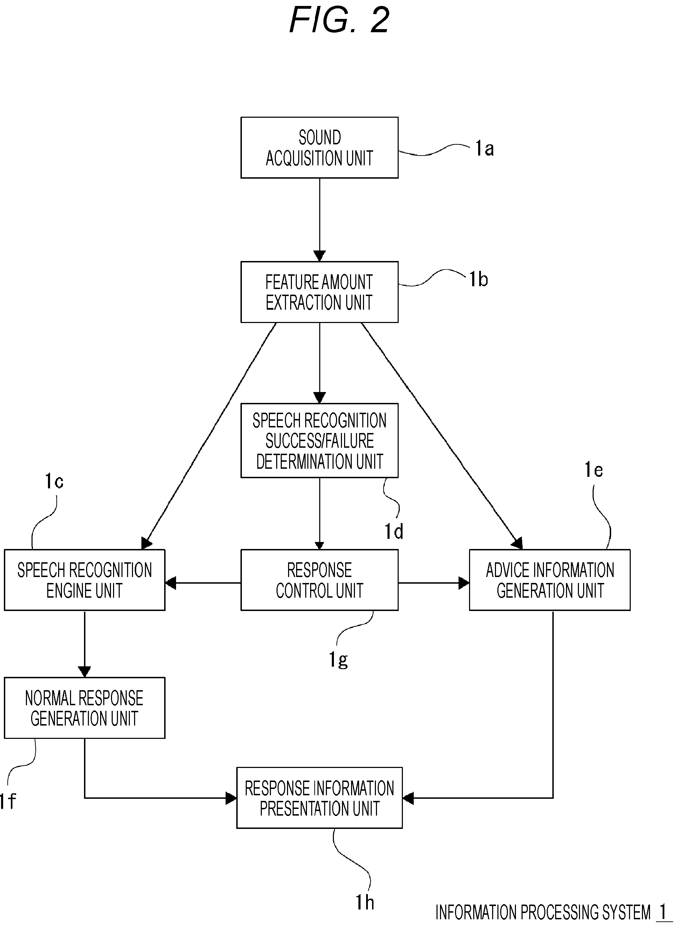

As illustrated in Fig. 2, the information processing system 1 includes a sound acquisition unit 1a, a feature amount extraction unit 1b, a speech recognition engine unit 1c, a speech recognition success/failure determination unit 1d, an advice information generation unit 1e, a normal response generation unit 1f, a response control unit 1g, and a response information presentation unit 1h.

Each of these units is only required to be included in the entire information processing system 1. Thus, some of the units may be included in the server device 2 and other units may be included in the user terminal 3, or all the units may be included in the user terminal 3. Furthermore, a configuration may be adopted in which one unit is included in both the server device 2 and the user terminal 3.

The sound acquisition unit 1a acquires sound information such as a speech uttered by the user or an ambient environmental sound (including noise). For example, the sound acquisition unit 1a is constituted by one or a plurality of microphones. The sound acquisition unit 1a is a function included in the user terminal 3.

The feature amount extraction unit 1b performs processing of converting acquired sound information into a speech feature amount (feature amount of a speech signal). The speech feature amount may be, for example, a volume, a direction from which the sound comes, a Fourier coefficient, a value of mel frequency cepstrum, or a sound signal itself.

The speech recognition engine unit 1c performs processing of converting a speech feature amount into command information. The command information may be text information in natural language, or may be a finite number of commands or parameters prepared in advance.

That is, the command information obtained by this conversion is, for example, user instruction (command) information grasped as a result of analysis of a speech input by the user. Specifically, it is information for identifying a command such as "tell me a restaurant nearby".

The speech recognition success/failure determination unit 1d uses a speech feature amount extracted by the feature amount extraction unit 1b as an input to perform processing of determining whether or not command information generated by the speech recognition engine unit 1c has been intended by the user. Note that command information may be acquired from the speech recognition engine unit 1c to determine success or failure.

The advice information generation unit 1e uses a speech feature amount output from the feature amount extraction unit 1b and information regarding a location of the user to generate advice information to be presented to the user for success in the next speech recognition.

The normal response generation unit 1f uses command information output from the speech recognition engine unit 1c as an input to generate normal response information used to make a normal response corresponding to the command information. For example, as normal response information to be presented to the user in response to command information "find restaurants nearby", restaurant information in accordance with a current location of the user is generated. Such information may be acquired from, for example, a database (DB) included in the information processing system 1 or a DB included in an external system.

In order to perform such processing, the normal response generation unit 1f may acquire information regarding the current location of the user from the user terminal 3.

The response control unit 1g acquires recognition success/failure information from the speech recognition success/failure determination unit 1d, and instructs the normal response generation unit 1f or the advice information generation unit 1e to generate response information. The response information is information that is presented to the user as a response to a user's speech input, such as normal response information or advice information.

The response control unit 1g may instruct, on the basis of recognition success/failure information, either one of the normal response generation unit 1f or the advice information generation unit 1e to generate response information, or may instruct both the normal response generation unit 1f and the advice information generation unit 1e to generate response information.

For example, the normal response generation unit 1f may be instructed to generate normal response information on the basis of command information obtained by conversion as a result of speech recognition of a user's speech input, and at the same time, the advice information generation unit 1e may be instructed to generate advice information for advising the user on an action that the user should take in a case where the recognized command information is incorrect.

The response information presentation unit 1h performs processing of presenting response information generated by the normal response generation unit 1f or the advice information generation unit 1e. The response information presentation unit 1h may be included in the server device 2, or may be included in the user terminal 3. Specifically, the response information presentation unit 1h of the server device 2 may execute processing for presenting response information to the user terminal 3, or the response information presentation unit 1h of the user terminal 3 may perform presentation processing so as to present response information received from the server device 2.

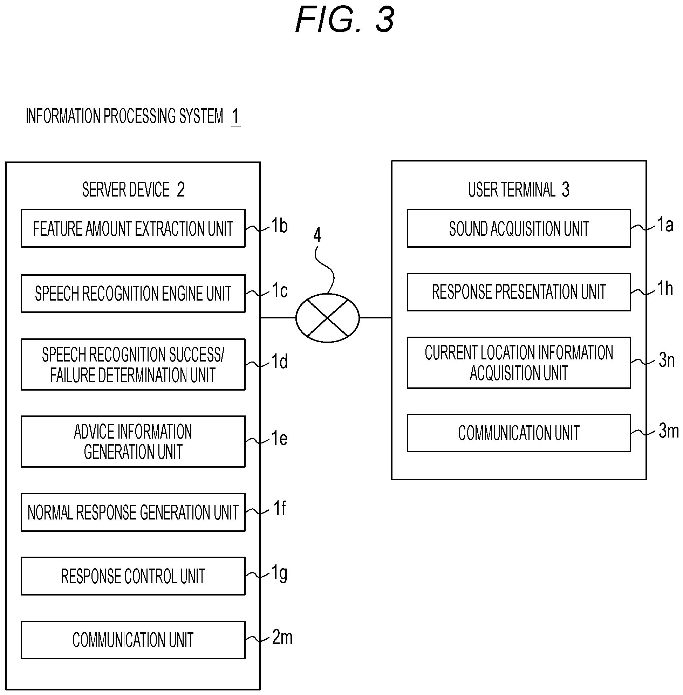

Fig. 3 is a diagram illustrating which of the server device 2 or the user terminal 3 includes each of the sound acquisition unit 1a, the feature amount extraction unit 1b, the speech recognition engine unit 1c, the speech recognition success/failure determination unit 1d, the advice information generation unit 1e, the normal response generation unit 1f, the response control unit 1g, and the response information presentation unit 1h described above.

The server device 2 includes the feature amount extraction unit 1b, the speech recognition engine unit 1c, the speech recognition success/failure determination unit 1d, the advice information generation unit 1e, the normal response generation unit 1f, the response control unit 1g, and a communication unit 2m.

The communication unit 2m communicates with an external device such as the user terminal 3. In this example, processing for sending response information, generation of which has been instructed by the response control unit 1g, to the user terminal 3 is performed.

Furthermore, processing of receiving sound information and current location information, which are information sent from the user terminal 3, is performed.

The user terminal 3 includes the sound acquisition unit 1a, the response information presentation unit 1h, a current location information acquisition unit 3n, and a communication unit 3m. The user terminal 3 may be, for example, a mobile phone or a wearable terminal. Specific examples of the wearable terminal include a wristwatch, glasses, neckband earphones, and headphones.

The current location information acquisition unit 3n performs processing of acquiring location information from the Global Positioning System (GPS), for example. The location information is not limited to that from GPS, and the location information may be acquired by receiving a signal transmitted by a beacon transmitter.

The location information may be acquired regularly, or may be acquired as needed.

The communication unit 3m communicates with an information processing apparatus other than the user terminal 3. Specifically, processing of sending sound information, current location information, and the like to the server device 2 is performed. Furthermore, processing of receiving, from the server device 2, response information and the like to be presented to the user is performed.

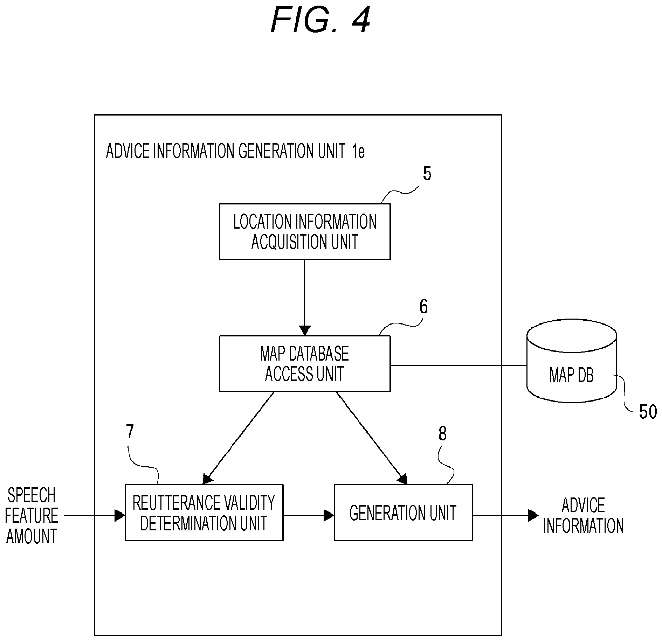

The advice information generation unit 1e will be described in detail with reference to Fig. 4.

The advice information generation unit 1e includes a location information acquisition unit 5, a map database access unit 6, a reutterance validity determination unit 7, and a generation unit 8.

The location information acquisition unit 5 performs processing of acquiring current location information from the user terminal 3. The acquired current location information is passed to the map database access unit 6.

The map database access unit 6 receives current location information from the user terminal 3 and acquires information for various types of processing from a map database 50. The map database 50 stores map data in which location information is associated with other information.

Specific examples of the map data will be described.

The reutterance validity determination unit 7 receives information regarding a speech feature amount from the feature amount extraction unit 1b, and performs processing of determining whether or not reutterance on the spot is valid. In the processing of determining validity of reutterance, it is determined whether or not the current location is a place suitable for reutterance. Information used for this processing is map data. Information related to environmental noise such as types of noise and distributions of noise level is stored as the map data.

As the information stored as the map data, for example, information regarding whether or not there is a noise source such as a highway in the vicinity of the place is used in the processing of determining validity of reutterance. The noise source may be a noise source that exists for only a limited time. For example, in a case where a building in the vicinity is under construction during a certain period of time, information regarding a location of the building under construction may be stored as a noise source only during that period.

Furthermore, information in which information regarding a location of a facility is associated with a label indicating an intended use or the like is also an example of the map data. For example, information regarding whether or not the current location of the user who makes a speech input is included in an utterance restriction area can be obtained from the map data. That is, the map database 50 stores information regarding places where utterance in a loud voice is undesirable, such as inside a hospital.

In the processing of determining validity of reutterance, the validity of reutterance is determined by using such map data.

Moreover, the map data may be information regarding differences in elevation of the ground, undulations (mountains and basins), and the like. The processing of determining validity of reutterance may be performed on the basis of those types of information.

The map data is also used in other types of processing.

For example, in a case where recognition of a speech input by the user has failed, the map data may be used to search for a place for retry. Furthermore, the map data may be used to identify a cause of failure of speech recognition. Specific examples of them will be described later.

The generation unit 8 receives a determination result of the reutterance validity determination, and performs processing of generating advice information in accordance with the result. At this time as well, the map data stored in the map database 50 is used.

For example, in a case where it is determined that reutterance on the spot is undesirable, it may be conceivable to propose, as advice information, to move to an alternative location and then retry a speech input. In this case, an alternative location that is too far from the current location is highly likely to be unsuitable, and an alternative location that is close in distance but difficult to get to is also highly likely to be unsuitable. Moreover, a place with a noise source in the surroundings is also undesirable as an alternative location.

The map data is also used to determine whether or not an alternative location is suitable.

Advice information generated by the generation unit 8 is sent to the response information presentation unit 1h.

Note that the reutterance validity determination unit 7 also performs processing of identifying a cause of failure of speech recognition.

### <2. Configuration of information processing apparatus>

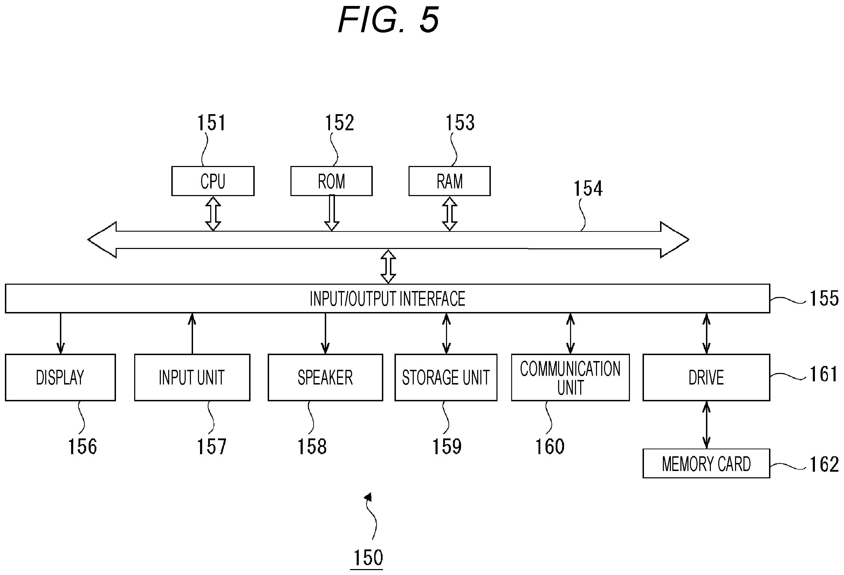

Configurations of various information processing apparatuses 150 (including the server device 2 and the user terminal 3) included in the information processing system 1 will be described. An information processing apparatus has a hardware configuration as illustrated in Fig. 5, for example.

An information processing apparatus 150 is constituted by a central processing unit (CPU) 151, a read only memory (ROM) 152, and a random access memory (RAM) 153.

The CPU 151 executes various types of processing in accordance with a program stored in the ROM 152 or a program loaded from a storage unit 159 into the RAM 153. The RAM 153 also stores, as appropriate, data or the like necessary for the CPU 151 to execute the various types of processing.

The CPU 151, the ROM 152, and the RAM 153 are connected to each other by a bus 154. An input/output interface 155 is also connected to the bus 154.

The input/output interface 155 can be connected with a display 156 constituted by a liquid crystal panel, an organic electroluminescence (EL) panel, or the like, an input unit 157 constituted by a keyboard, a mouse, or the like, a speaker 158, the storage unit 159 constituted by a hard disk drive (HDD) or the like, a communication unit 160, and the like.

The display 156 may be integrated with the information processing apparatus 150, or they may be separate devices.

The input unit 157 means an input device used by a user who uses the information processing apparatus 150. Specifically, the input unit 157 is a touch panel or a microphone in the user terminal 3.

The communication unit 160 performs communication processing via a network including the Internet and communication with devices in the surroundings. Examples of the communication unit 160 include the communication unit 2m of the server device 2 and the communication unit 3m of the user terminal 3.

The input/output interface 155 is also connected with, as needed, a drive 161, into which a memory card 162 is inserted, and a computer program read from the memory card 162 is installed on the storage unit 159 as needed or data processed by the CPU 151 is stored in the memory card 162.

As a matter of course, the drive 161 may be a recording/reproducing drive for a removable storage medium such as a magnetic disk, an optical disk, or a magneto-optical disk.

With such a hardware configuration, various types of processing (described later) to be performed by the information processing apparatus 150 of the embodiment can be performed. Specifically, the user terminal 3 performs processing of acquiring sound information, processing of presenting response information, and the like. Furthermore, the server device 2 can perform processing of determining success or failure of speech recognition, processing of generating advice information, and the like.

These pieces of processing are implemented by software started by the CPU 151. A program constituting the software is downloaded from a network or read from a removable storage medium and installed on the information processing apparatus 150 in Fig. 5. Alternatively, the program may be stored in advance in an HDD or the like as the storage unit 159. Then, when the program is started by the CPU 151, each function of the information processing apparatus 150 is exerted.

Note that the information processing apparatus 150 is not limited to a configuration of a single information processing apparatus 150 having the hardware configuration as illustrated in Fig. 5, and may have a configuration in which a plurality of information processing apparatuses is systematized. The plurality of information processing apparatuses may be systematized by a LAN or the like, or may be arranged in remote locations via a virtual private network (VPN) or the like using the Internet or the like. The plurality of information processing apparatuses may include an information processing apparatus that can be used via a cloud computing service.

Furthermore, the information processing apparatus 150 can be constituted by a personal computer such as a desktop or laptop personal computer, or a mobile terminal such as a tablet terminal or a smartphone.

Various electronic devices such as an image editing device, a recording/reproducing device, and a television receiver having a configuration as illustrated in Fig. 21 can function as the information processing apparatus 150.

### <3. Each piece of processing>

### [3-1. Overall processing]

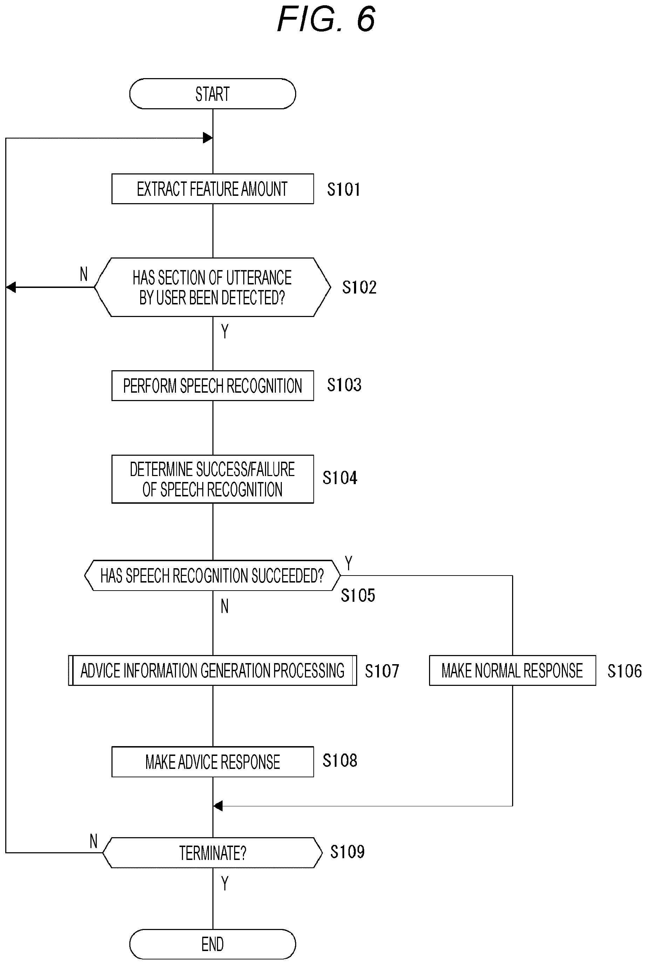

Each piece of processing to be executed by the information processing system 1 from when a user makes a speech input to when response information is presented will be described with reference to Fig. 6.

Note that a series of pieces of processing illustrated in Fig. 6 is executed by the information processing system 1 using each function of the sound acquisition unit 1a to the response information presentation unit 1h, the communication unit 2m, the current location information acquisition unit 3n, the communication unit 3m, and the like included in the server device 2 or the user terminal 3.

When each piece of processing described below is executed, the user terminal 3 of the information processing system 1 is assumed to be in a state in which a speech uttered by the user or a surrounding environmental sound is input by the sound acquisition unit 1a such as a microphone (sound input state). A configuration may be adopted in which transition into a sound input state is made when the user starts an application installed on the user terminal 3, or a configuration may be adopted in which the user terminal 3 is always in a sound input state while the user terminal 3 is in operation.

The information processing system 1 performs feature amount extraction processing in step S101. This processing is processing of converting sound information input via the sound acquisition unit 1a into a speech feature amount and acquiring the speech feature amount.

The speech feature amount is, for example, a volume, a speech spectrogram, a mel frequency cepstrum, or a sound signal waveform itself.

Subsequently, the information processing system 1 determines in step S102 whether or not a section of utterance by the user has been detected. A case where an utterance section has been detected indicates, for example, a case where both detection of a start point at which the user has started to utter for giving an instruction of some kind by a speech and detection of an end point have been achieved. Detection of an end point can be achieved by, for example, detecting a period of time during which no speech input has been made for a predetermined time.

In a case where a start point of utterance has been detected but an end point has not been detected (for example, in a case where the utterance is being continued), the processing returns to step S101.

In a case where an utterance section has been detected, the information processing system 1 performs speech recognition processing in step S103. This processing is processing of grasping a user's utterance content (command information) on the basis of the speech feature amount. That is, this is processing of converting the speech feature amount into command information.

Subsequently, the information processing system 1 determines in step S104 success or failure of speech recognition. This processing is processing of determining whether or not the utterance content has been successfully grasped in the previous step S103.

Specifically, a deep neural network (DNN) that uses the speech spectrogram and average speech energy in the utterance section as inputs is used for conversion into a speech recognition likelihood. This DNN uses speech utterances that are known to succeed or fail in speech recognition and have been learned in advance as training data.

If the speech recognition likelihood output by the DNN is equal to or greater than a threshold parameter, it is determined that the speech recognition has succeeded, and if it is smaller than the threshold parameter, it is determined that the speech recognition has failed.

In step S105, the information processing system 1 performs branch processing based on success or failure of the speech recognition. In a case where it is determined that the speech recognition has succeeded, the information processing system 1 makes a normal response in step S106. As previously described, this processing is processing of performing an appropriate output in accordance with command information. Specifically, information to be presented to the user is acquired from a database, generated (processed) as information to be presented as needed, and presented to the user in this processing. For example, in response to command information "find restaurants nearby", information regarding restaurants in accordance with a current location of the user is acquired from a database storing information regarding restaurants, information is generated in accordance with the way of presentation to the user, and the information is sent to the user terminal 3. The user terminal 3 outputs the received information to be presented in an appropriate way (in a way such as by speech output or by screen display) to the user.

On the other hand, in a case where the speech recognition has failed, the information processing system 1 performs advice information generation processing in step S107. A specific example of the advice information generation processing will be described later.

After generating advice information, the information processing system 1 makes an advice response for presenting the advice information to the user in step S108. With this arrangement, advice information in accordance with the type of failure of speech recognition is presented to the user.

Finally, in step S109, the information processing system 1 determines whether or not the user has given an instruction to stop the speech input. For example, in a case where a stop instruction has been given, such as a case where an operation for terminating an application installed on the user terminal 3 for speech recognition or the like has been performed, the series of pieces of processing illustrated in Fig. 6 is terminated.

Alternatively, in a case where a stop instruction has not been given, the processing returns to step S101 in preparation for the next speech input.

### [3-2. Advice information generation processing]

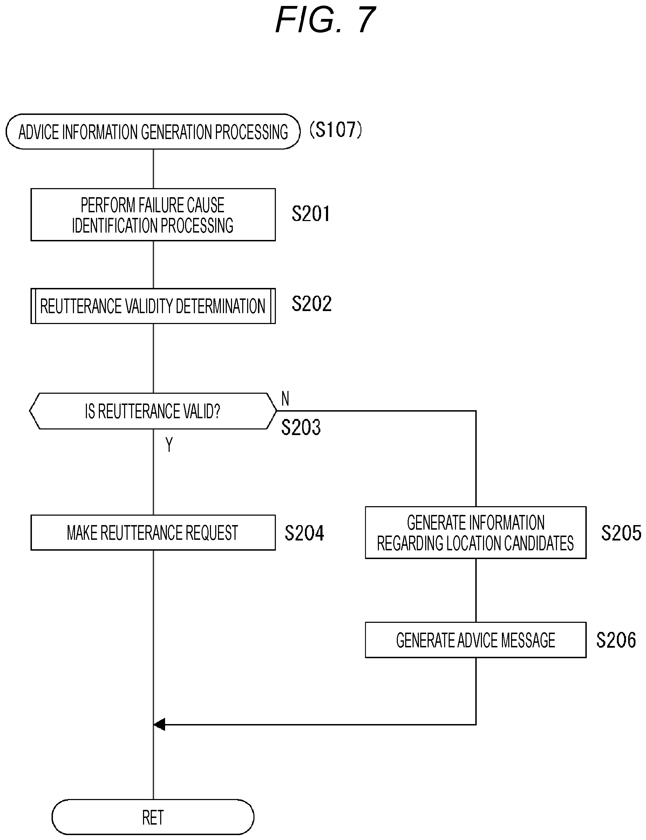

The advice information generation processing is, for example, processing executed by the information processing system 1 using a function of the advice information generation unit 1e. A specific description will be given with reference to Fig. 7.

In step S201, the information processing system 1 executes processing of identifying a cause of failure.

For example, it is possible to implement the processing by preparing in advance candidates for a cause of failure of speech recognition and using a classifier that classifies, into an applicable candidate, a speech feature amount obtained by conversion of sound information input by this speech input.

It is conceivable to prepare a plurality of types of candidates for a cause of speech recognition failure. Specific examples are given below.

Candidate 1: An utterance speed is too fast.
Candidate 2: A microphone signal gain is too high.
Candidate 3: A noise of a crowd is too loud.
Candidate 4: A noise from a road nearby is too loud.

Candidates 1 and 2 are due to the way of utterance. Furthermore, candidates 3 and 4 are due to non-transient noise at the current location of the user. The non-transient noise may be, for example, constant noise measured at the place, or noise that is continuously measured for a period of time such as several minutes or several hours, which is longer than an utterance section (for example, in a case of an utterance section of five seconds, for a long time equal to or longer than five seconds).

Note that, although four candidates have been exemplified, there can be many other candidates. Here, the number of candidates for a cause of speech recognition failure is expressed as N.

In the processing of identifying the cause of failure of speech recognition, a speech spectrogram extracted by the feature amount extraction processing is input to the DNN that has learned in advance using training data. The speech spectrogram input here may be an input corresponding to a length of a detected utterance section, or may be an input of a fixed-length partial section cut out from an utterance section.

The DNN applies a several-step conversion to input information, and outputs a likelihood of each candidate for a cause of speech recognition failure as an N-dimensional vector. The cause of failure in the utterance is determined from the likelihood of each candidate.

For example, in a case where data input to the DNN is a speech spectrogram corresponding to a length of a detected utterance section, it is determined that a candidate with the highest likelihood is the cause of failure of the speech recognition.

Furthermore, in a case where data input to the DNN is a fixed-length speech spectrogram of a partial section cut out from a detected utterance section, a plurality of outputs from the DNN for fixed-length speech spectrograms of a plurality of partial sections cut out from the utterance section is integrated to determine the cause of failure of the speech recognition.

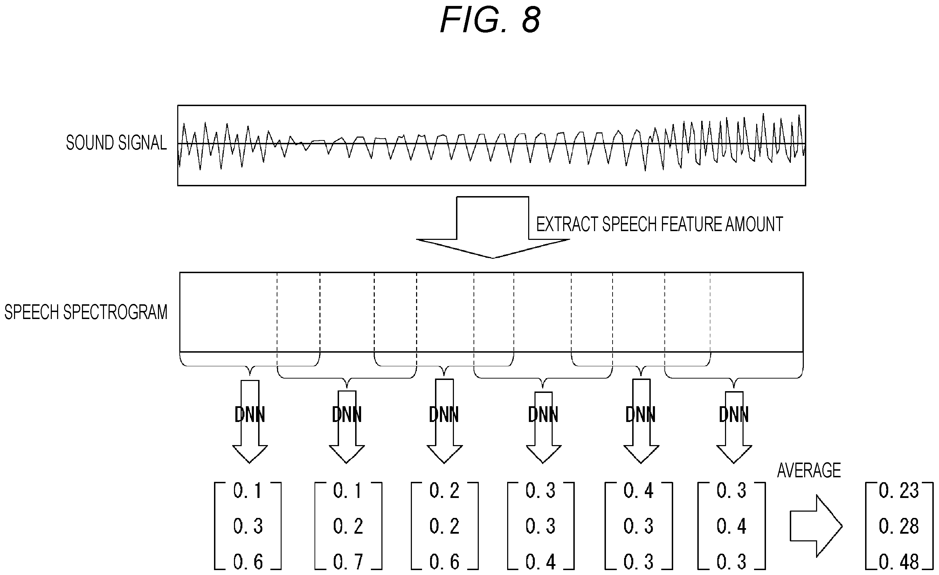

A specific description will be given with reference to Fig. 8. Fig. 8 illustrates an example in which the number of candidates for a cause of speech recognition failure is three (N = 3). That is, this example shows three candidates a, b, and c as candidates for a cause of failure of speech recognition.

A speech spectrogram corresponding to a length of an utterance section is extracted as a speech feature amount from a sound signal, and six fixed-length speech spectrograms are cut out from the speech feature amount and are each input to the DNN.

For each speech spectrogram input to the DNN, a three-dimensional vector is output for each candidate (candidates a, b, and c) for the cause of failure of the speech recognition.

Specifically, from the first fixed-length speech spectrogram, a three-dimensional vector with 0.1, 0.3, and 0.6 as elements is output. At this time, 0.1 is a numerical value indicating a degree of possibility (likelihood) that the cause of failure of the speech recognition is candidate a. Furthermore, 0.3 is a numerical value indicating a degree of possibility (likelihood) that the cause of failure of the speech recognition is candidate b. Then, 0.6 is a numerical value indicating a degree of possibility (likelihood) that the cause of failure of the speech recognition is candidate c.

Thus, Fig. 8 illustrates that the DNN has determined that, from the first fixed-length speech spectrogram, it is highly likely that the cause of failure of the speech recognition is candidate c.

Similarly, when the cause of failure is determined by using the likelihood of each candidate for the cause of failure obtained as a result of inputting each of the first to sixth fixed-length speech spectrograms to the DNN, [0.1 0.3 0.6]^T, [0.1 0.2 0.7]^T, [0.2 0.2 0.6]^T, [0.3 0.3 0.4]^T, [0.4 0.3 0.3]^T, and [0.3 0.4 0.3]^T are obtained. Note that "^T" indicates transposition of a vector. When an average value is calculated for each candidate for the cause of failure, the average likelihood of candidate a is about 0.23, the average likelihood of candidate b is about 0.28, and the average likelihood of candidate c is about 0.48.

Thus, in failure cause identification processing of step S201 in Fig. 7, candidate c is identified as the cause of failure of the speech recognition.

Note that map data may be used in the processing of identifying the cause of speech recognition failure. That is, a configuration may be adopted in which, even in a case where similar speech spectrograms are input to the DNN, different failure causes may be identified depending on the current location of the user.

The description returns to Fig. 7.

In step S202, the information processing system 1 executes processing of determining validity of reutterance. The validity of reutterance is processing of determining whether or not retrying of utterance by the user on the spot without changing location is likely to result in success in speech recognition.

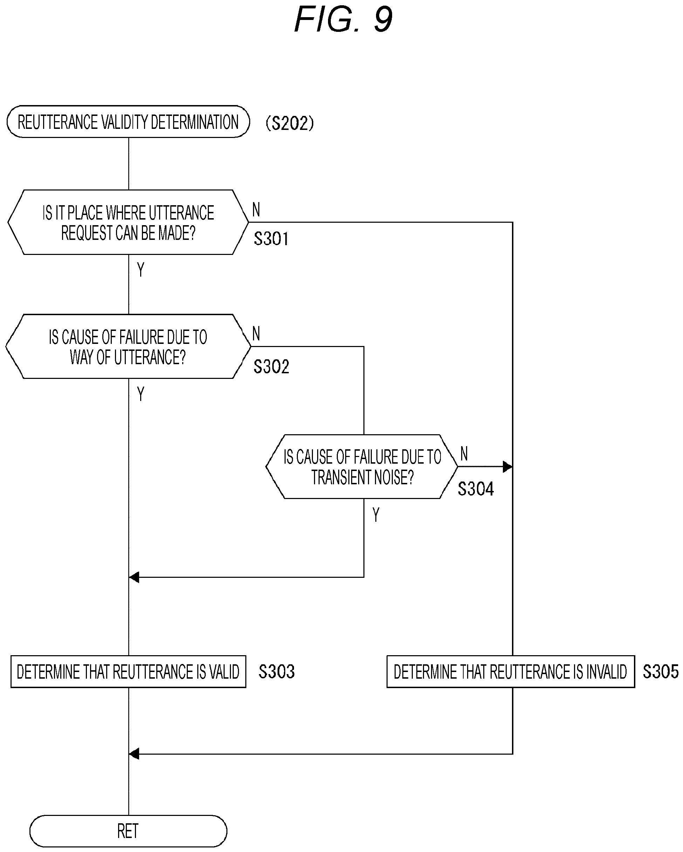

An example of the processing of determining validity of reutterance will be described with reference to Fig. 9.

In step S301, the information processing system 1 determines whether or not it is a place where an utterance request can be made. The place where an utterance request can be made is a place where utterance is prohibited or a place where utterance is suppressed. Specifically, in a hospital, a library, or the like where it is undesirable to speak, it is determined that an utterance request cannot be made. On the other hand, on a public road, in a restaurant, or the like, it is determined that an utterance request can be made.

Note that such a determination may be made on the basis of location information acquired from the user terminal 3 and information stored in the map database 50, for example. That is, in association with information regarding a location, whether or not utterance is allowed at the place is stored in the map database 50, and the information is referenced when a determination is made whether or not utterance is allowed at the place where the user terminal 3 is currently located.

Furthermore, together with the map database 50 in which information indicating a location on a map is associated with information indicating an intended use of a facility located there (restaurant, coffee shop, hospital, or the like), a database in which each intended use of facilities is associated with feasibility of making an utterance request (an utterance request can be made, or an utterance request cannot be made) may be used to make the determination.

In a case where it is determined that the user terminal 3 is located at a place where an utterance request can be made, the information processing system 1 determines in step S302 whether or not the cause of failure is due to the way of utterance.

In a case where the cause of failure of the speech recognition is the way of utterance, such as a case where the utterance speed is too fast or too slow, or a case where the microphone signal gain is too high or too low with no noise in the surroundings, the information processing system 1 determines in step S303 that retrying of an utterance is valid.

On the other hand, in a case where it is determined that the cause of failure is not due to the way of utterance, the information processing system 1 determines that the cause of failure is due to a surrounding environment, and determines in step S304 whether or not the cause of failure of the speech recognition is transient noise.

For example, the map database 50 may be used for the determination of whether or not the cause of failure is transient noise. Specifically, it is conceivable to store, in the map database 50, a level and loudness of non-transient noise in association with each location. In a case where speech recognition has failed in a place where the level of non-transient noise is not high and the cause of failure is not due to the way of utterance, it may be determined that the cause of failure is due to transient noise. Furthermore, in a case where transient noise has been detected as a result of analysis of acquired sound information, it may be determined that the speech recognition has failed due to the transient noise.

In a case where it is determined that the cause of failure of the speech recognition is transient noise, it is highly likely that retrying utterance at the same place results in success in speech recognition, so the information processing system 1 determines in step S303 that reutterance is valid.

On the other hand, in a case where it is determined that the cause of failure of the speech recognition is not transient noise but non-transient noise, the information processing system 1 determines in step S305 that reutterance is invalid.

Note that, also in a case where it is determined in step S301 that an utterance request cannot be made at the place, that is, in a case where the user is located in a hospital or the like, the information processing system 1 determines in step S305 that reutterance is invalid.

The description returns to Fig. 7.

The information processing system 1 performs the processing of step S202 to obtain a result of determination of whether or not reutterance is valid.

Next, in step S203, the information processing system 1 performs branch processing depending on whether or not reutterance is valid. In a case where reutterance is valid, the information processing system 1 makes a reutterance request in step S204. That is, the user is prompted to retry a speech input via the user terminal 3. Specifically, the user terminal 3 may display a prompt for retrying a speech input, or may perform a speech output of a prompt for making a speech input. In other words, information for prompting reutterance at the current location without changing location is presented through the user terminal 3.

On the other hand, in a case where it is determined that reutterance is invalid, the information processing system 1 performs in step S205 processing of generating information regarding location candidates. In this processing, for example, the map data stored in the map database 50 is used.

The shorter the user's moving distance, the more preferable the location candidate is, and the higher the success probability of speech recognition, the more desirable the location candidate is. Thus, in the processing of step S205, appropriate location candidates are generated in consideration of these factors. In other words, information for prompting reutterance at an alternative location different from the current location is presented via the user terminal 3.

Note that priorities may be assigned to the location candidates.

Several examples can be considered for the processing of generating location candidates.

For example, in a case where speech recognition continues to fail although a user repeatedly tries a speech input while changing location over and over, it is conceivable to generate location candidates with the shortest possible moving distances. Alternatively, in order not to repeat failure any more, information may be generated with weighting applied to location candidates that are likely to have a higher success probability of speech recognition.

Furthermore, the success probability of speech recognition may be calculated for each place using information regarding records of other users, and results of the calculation may be referenced to generate location candidates having a high success probability of speech recognition.

Moreover, the moving distance and the success probability of speech recognition may each be weighted differently depending on the user so that location candidate information may differ depending on the user, or location candidates may be the same regardless of the user. For example, for a user who is in a situation that makes it difficult for the user to change location, the moving distance may be highly weighted so that a location candidate with a shorter moving distance may tend to be selected.

The information processing system 1 that has generated location candidate information performs processing of generating an advice message in step S206. For example, a location candidate having the highest priority may be selected from location candidates, and a message prompting to change location and then retry a speech input may be generated as an advice message. Alternatively, list information for showing location candidates as they are to the user may be generated, and at the same time, a wording such as "choose a location from the following" may be generated as an advice message.

### <4. Modified example>

In the speech recognition success/failure determination processing of step S104 described above, an example in which the processing is performed using only a speech feature amount extracted by the feature amount extraction processing has been described. Here, not only a speech feature amount but also command information may be used to determine success or failure of speech recognition.

For example, in a case where the number of pieces of valid command information to be passed to the normal response generation unit 1f is limited to a finite number, success or failure of speech recognition may be determined in a simplified manner in which the speech recognition success/failure determination unit 1d determines whether or not command information obtained by the speech recognition engine unit 1c by speech recognition belongs to a set of pieces of valid command information.

This reduces a processing load.

Furthermore, the processing example described above shows an example in which either one of normal response information or advice information is presented to the user, but a configuration may be adopted in which both normal response information and advice information are presented on the user terminal 3 so as to increase the amount of information and increase a possibility that appropriate information is presented to the user.

With this arrangement, in a case where the normal response information is in accordance with a speech input made by a user and is thus appropriate, the user can browse the normal response information and obtain appropriate information the user desires. Alternatively, in a case where the normal response information is not the information the user desires, the user can browse the advice information and select an appropriate action for success in the next speech input.

In the example described above, the processing of identifying a cause of failure of speech recognition (step S201) and the processing of generating an advice message (step S206) are performed separately, but it is also possible to construct the DNN so that an advice message is generated directly from a speech feature amount. That is, instead of outputting N-dimensional likelihood vectors of candidates for a cause of speech recognition failure, a recurrent neural network (RNN) or a long short-term memory (LSTM) that sequentially output texts may be used.

With this arrangement, it is possible to provide information with high responsiveness to a user's speech input.

In the example described above, the map database 50 stores, as map data, information in which location information is associated with a type of environmental noise and a distribution of environmental noise level, and information in which location information is associated with a use and a purpose of a facility such as a public road, a restaurant, or a hospital. Alternatively, information stored may be a success frequency and a failure frequency of speech recognition with this configuration that are extracted from a usage history of the user for each place and accumulated as distributions (success area and failure area). Furthermore, information regarding a distribution of people for each place and each time period may be stored.

In the example described above, in a case where the cause of failure is transient noise (step S304), it is determined that reutterance is valid and the user is prompted to make a reutterance on the spot. Alternatively, a configuration may be adopted in which, in a case where not a sudden noise but a non-transient noise has been detected after a prompt for user's reutterance and before starting of user's reutterance, the display prompting reutterance on the spot is stopped and the user is prompted to change location. Furthermore, in that case, even in a case where the user is prompted to make a reutterance on the spot, it is possible to search for alternative locations in advance using map data or the like, which makes it possible to provide a system that can respond immediately to a change in the surrounding environment.

In the example described above, the server device 2 performs various types of determination processing. Alternatively, some of them may be included in the user terminal 3. For example, the user terminal 3 may include the feature amount extraction unit 1b, the speech recognition engine unit 1c, and the speech recognition success/failure determination unit 1d. In this case, the user terminal 3 determines success or failure of speech recognition, and performs, in accordance with the result, processing of requesting either advice information or normal response information from the server device 2. On the basis of the request, the server device 2 sends, to the user terminal 3, information to be presented that has been generated by the advice information generation unit 1e or the normal response generation unit 1f. The user terminal 3 performs presentation processing of presenting, to the user, the received information to be presented.

Furthermore, the user terminal 3 may further include the advice information generation unit 1e, the normal response generation unit 1f, and the response control unit 1g. That is, each piece of determination processing or the like may be performed by the user terminal 3.

### <5. Summary>

As described above, the information processing apparatus (server device 2) includes the speech recognition success/failure determination unit 1d that determines success or failure of speech recognition of a user's speech input, the normal response generation unit 1f that generates normal response information to be presented to the user in a case where it is determined in the determination that the speech recognition has succeeded, and the advice information generation unit 1e that generates advice information to be presented to the user in a case where it is determined in the determination that the speech recognition has failed due to a surrounding environment of the user.

In a case where the speech recognition has failed due to the surrounding environment of the user, advice information to be presented for success in the next speech recognition is generated. This makes it possible to present advice information that allows the user to take an appropriate action.

Thus, the user can take an appropriate action in accordance with the advice information, and this increases a possibility of success in a speech input.

For example, it is easy to configure a system that presents advice information saying "speak more slowly" in a case where the utterance speed is too fast, in other words, an advice information generation system that associates a cause of failure of speech recognition with a piece of advice information on a one-to-one basis. However, in the case of such a system, the system may be valid for a problem that can be solved by reutterance on the spot, but cannot present appropriate advice information in a case where speech recognition retried on the spot does not succeed.

However, according to this configuration, even in a case of a problem that cannot be solved by reutterance on the spot, the advice information generation unit 1e that generates advice information for success in the next speech recognition is included, and this makes it possible to present valid advice information to the user. This effect can be more easily implemented by providing a configuration described later that presents an alternative location different from the current location as a place for retry.

Note that the user terminal 3 includes the communication unit 3m that receives information to be presented and a presentation unit that presents the received information, the information to be presented being generated by any of speech recognition success/failure determination processing (step S104) for determining success or failure of speech recognition of a user's speech input, normal response generation processing (step S106) for generating normal response information to be presented to the user in a case where it is determined in the determination that the speech recognition has succeeded, or advice information generation processing (step S107) for generating advice information to be presented to the user in a case where it is determined in the determination that the speech recognition has failed due to a surrounding environment of the user.

Furthermore, the response control unit 1g may be included that selects the normal response information in a case where a result indicating that the speech recognition has succeeded has been acquired as a result of the determination, and selects the advice information in a case where a result indicating that the speech recognition has failed has been acquired as described in step S105 in Fig. 6.

That is, response information (either normal response information or advice information) is selected in accordance with the success or failure of the speech recognition. Alternatively, which response information is to be generated is determined in accordance with the success or failure of the speech recognition.

Thus, since appropriate information is selected as information to be presented to the user, an appropriate response is made in accordance with the surrounding environment.

Moreover, the response information presentation unit 1h may be included that presents information selected by the response control unit 1g to the user as described in steps S106 and S108 in Fig. 6.

That is, the response information in accordance with the success or failure of the speech recognition is presented to the user.

With this arrangement, in a case where it is determined that speech recognition has succeeded, appropriate information is presented to a user in accordance with a recognized speech instruction, and in a case where speech recognition has failed, appropriate advice information for success in the next speech recognition can be presented to the user, and this allows an instruction the user wants to give by speech input to be implemented with a small number of tries.

Furthermore, as described in step S201 in Fig. 7, in a case where speech recognition has failed, cause determination processing (failure cause identification processing) for determining (identifying) the cause of failure may be performed.

The cause of the speech recognition failure of the user's speech input is identified.

Thus, when speech recognition has failed, it is possible to generate appropriate advice information in accordance with the cause of failure, and presenting the advice information to the user increases a possibility of success in the next speech recognition.

In addition, as described in steps S302 and S304 in Fig. 9 and the like, the cause determination processing (failure cause identification processing) may determine whether the failure is due to a way of utterance or due to noise.

With this arrangement, it is determined whether the cause of failure of the speech recognition is due to the way of utterance that can presumably be resolved by retry or due to noise.

Thus, for example, in a case where the cause of failure is due to the way of utterance, it is possible to perform processing such as presenting advice information for retrying speech recognition.

Then, as described in steps S302 and S304 in Fig. 9, in the cause determination processing (failure cause identification processing), in a case where it is determined that the failure is due to noise, it may be further determined whether the noise is transient noise or non-transient noise.

In a case where the cause of failure of the speech recognition is noise, determining a characteristic of the noise makes it possible to appropriately determine which of advice information requesting for retry of a speech input or another type of advice information is to be presented.

Specifically, in a case where the noise is transient noise (temporary noise), it is highly likely that retrying speech input will result in success in speech recognition, so advice information requesting retrying of a speech input is presented. In a case where the noise is non-transient noise (non-temporary noise), it is unlikely that retrying a speech input will result in success in speech recognition, so different advice information is presented.

This makes it possible to present to the user appropriate advice information for success in the next speech recognition.

Note that it may be possible to construct a system that generates advice information "speak again in a quiet place" simply from a noise level, without using this configuration. However, it is highly likely that similar advice information is presented even in a case where the failure is due to a sudden and transient noise being mixed and it is highly likely that the level of constant noise at the place allows reutterance on the spot to result in success in the next speech recognition. In this case, the advice information compels the user to move to another place is therefore inappropriate.

Moreover, in a case where the user does not know any quiet place around, the user does not know where to move for successful speech recognition, and the advice information is therefore insufficient.

According to this configuration, in order to prevent such a situation, it is determined whether the noise is transient noise or non-transient noise. This allows an appropriate advice information to be presented to the user.

Furthermore, as described in the advice information generation processing in Fig. 7, a classifier may be used in the cause determination processing (failure cause identification processing).

Using the classifier makes it possible to automatically estimate the cause of failure of the speech recognition.

This makes it possible to promptly present appropriate advice to the user when speech recognition has failed.

Moreover, as described in the advice information generation processing in Fig. 7, the classifier may be generated by machine learning (for example, DNN).

Machine learning is used as a specific processing method for generating a classifier.

For example, when a specific method such as deep learning is used, the classifier can be automatically generated and can be used for estimating the cause of failure.

Furthermore, as described in step S201 in Fig. 7 and in Fig. 8, map data may be used in the cause determination processing (failure cause identification processing) to determine the cause of failure.

With this arrangement, not only information regarding noise and the like obtained by analysis of speech data but also map data are used to estimate a cause of the noise and the like and determine the cause of the failure.

Thus, an accuracy of the failure cause determination processing can be increased, and more appropriate advice information can be generated and presented.

In addition, as described in the advice information generation processing in Fig. 7, the advice information generation unit 1e may generate advice information including information for presenting a place to retry a speech input.

With this arrangement, information for success in the next speech recognition is presented to the user.

Thus, the user can take an appropriate action based on the advice information.

Then, as described in steps S304 and S305 in Fig. 9, steps S203 and S205 in Fig. 7, and the like, in a case where the cause of failure of the speech recognition is non-transient noise, the place for retry may be set to an alternative location different from the current location.

With this arrangement, an appropriate candidate location to move to for success in the next speech recognition is presented to the user as an alternative location.

Thus, the user can take an appropriate action on the basis of the advice information, and the possibility of success in the next speech recognition can be increased.

Furthermore, as described in steps S304 and S303 in Fig. 9, steps S203 and S204 in Fig. 7, and the like, in a case where the cause of failure of the speech recognition is transient noise, the place for retry may be set to the current location.

With this arrangement, advice information for suggesting an appropriate action that the user should take to succeed in the next speech recognition is generated.

Thus, the possibility of success in the next speech recognition can be increased. Furthermore, since the place for retry is set to the current location, the user does not have to move from the current location to make the next speech input and can swiftly make the next speech input, and the time required to run a function the user desires becomes shorter. That is, a highly convenient function can be provided.

Moreover, as described in step S301 in Fig. 9, in a case where it is determined that the current location of the user is in an utterance restriction area, the place for retry may be set to an alternative location different from the current location.

With this arrangement, advice information for success in the next speech recognition is generated, and at the same time, advice information is generated so that the user may not take an inappropriate action such as making a speech input in the utterance restriction area.

This prevents the user from taking an inappropriate action.

Furthermore, as described in step S205 in Fig. 7, the place for retry may be determined by using map data.

When an appropriate place (alternative location) to retry a speech input is determined, map data is used so that closeness to the alternative location, loudness of noise at the alternative location, and the like are taken into consideration.

That is, not only advice information that makes it easier for the user to succeed in retried speech input, but also appropriate advice information that takes into consideration ease of the retry is presented. That is, a service with high convenience for the user can be provided.

In addition, as described in step S205 in Fig. 7, the place for retry may be determined by using information regarding records of other users.

When an appropriate place (alternative location) to retry a speech input is determined, information regarding records of other users is used to generate advice information in view of a geographical situation (surrounding environment) where a speech input is actually likely to succeed.

Thus, even in a case where a place that is a candidate for an alternative location is in a situation that cannot be grasped in advance from map data or the like, an appropriate alternative location is selected on the basis of information regarding whether other users have actually succeeded or failed, and appropriate advice information for the user to succeed in the next speech input can be provided.

Furthermore, it is also valid to further take into account information regarding time. Taking into consideration information regarding records of other users that matches a time period in which the user is actually trying to make a speech input further increases the possibility of success in speech recognition of the user's speech input.

As described in the system configuration, the user terminal 3 may include a microphone that acquires a speech of the user.

In a case where a user terminal provided with a microphone includes a speech recognition success/failure determination unit, a normal response generation unit, and an advice information generation unit, the user terminal can execute processing of acquiring a speech of a user, determining success or failure of speech recognition, and generating, in accordance with the determination, either normal response information or advice information.

That is, it is possible to appropriately perform speech recognition and presentation of advice information only by the user terminal without communicating with another information processing apparatus such as a server device. Since communication does not occur, it is possible to suppress consumption of a communication capacity allowed for the user terminal.

A program according to the embodiment of the present invention causes an arithmetic processor to implement a speech recognition success/failure determination function that determines success or failure of speech recognition of a user's speech input, a normal response generation function that generates normal response information to be presented to the user in a case where it is determined in the determination that the speech recognition has succeeded, and an advice information generation function that generates advice information to be presented to the user in a case where it is determined in the determination that the speech recognition has failed due to a surrounding environment of the user.

More specifically, the program causes a control unit (the CPU 151 of the server device 2 in the information processing system 1 or the CPU 151 of the user terminal 3) as an arithmetic processor to execute each piece of processing illustrated in Figs. 6 to 9.

Such a program makes it easier to achieve the information processing system 1 of the present embodiment.

Such a program can be stored in advance in a recording medium built in a device such as an arithmetic processor, a ROM in a microcomputer having a CPU, or the like. Alternatively, such a program can be temporarily or permanently stored in a removable recording medium such as a semiconductor memory, a memory card, an optical disk, a magneto-optical disk, or a magnetic disk. Furthermore, such a removable recording medium can be provided as so-called package software.

Furthermore, such a program can be installed from a removable recording medium onto a personal computer or the like, or can be downloaded from a download site via a network such as a LAN or the Internet.

Note that the effects described herein are merely illustrative and are not intended to be restrictive, and other effects may be obtained.

### <6. Present technology>

The present technology can also be configured as described below.
(1) An information processing apparatus including:
   a speech recognition success/failure determination unit that determines success or failure of speech recognition of a user's speech input;
   a normal response generation unit that generates normal response information to be presented to the user in a case where it is determined in the determination that the speech recognition has succeeded; and
   an advice information generation unit that generates advice information to be presented to the user in a case where it is determined in the determination that the speech recognition has failed due to a surrounding environment of the user.
(2) The information processing apparatus according to (1), further including
   a response control unit that selects the normal response information in a case where a result indicating that the speech recognition has succeeded has been acquired as a result of the determination, and selects the advice information in a case where a result indicating that the speech recognition has failed has been acquired.
(3) The information processing apparatus according to (2), further including
   a response information presentation unit that presents information selected by the response control unit to the user.
(4) The information processing apparatus according to any one of (1) to (3), in which
   in a case where the speech recognition has failed, cause determination processing for determining a cause of failure is performed.
(5) The information processing apparatus according to (4), in which
   in the cause determination processing, it is determined whether the failure is due to a way of utterance or due to noise.
(6) The information processing apparatus according to (5), in which
   in the cause determination processing, in a case where it is determined that the failure is due to noise, it is further determined whether the noise is transient noise or non-transient noise.
(7) The information processing apparatus according to any one of (4) to (6), in which
   the cause determination processing uses a classifier.
(8) The information processing apparatus according to (7), in which
   the classifier is generated by machine learning.
(9) The information processing apparatus according to any one of (4) to (8), in which
   the cause determination processing uses map data to determine a cause of failure.
(10) The information processing apparatus according to any one of (1) to (9), in which
   the advice information generation unit generates advice information that includes information for presenting a place to retry a speech input.
(11) The information processing apparatus according to (10), in which
   in a case where a cause of failure of the speech recognition is non-transient noise, the place for retry is set to an alternative location different from a current location.
(12) The information processing apparatus according to (10) or (11), in which
   in a case where a cause of failure of the speech recognition is transient noise, the place for retry is set to a current location.
(13) The information processing apparatus according to any one of (10) to (12), in which
   in a case where it is determined that a current location of the user is in an utterance restriction area, the place for retry is set to an alternative location different from the current location.
(14) The information processing apparatus according to any one of (10) to (13), in which
   the place for retry is determined by using map data.
(15) The information processing apparatus according to any one of (10) to (14), in which
   the place for retry is determined by using information regarding records of other users.
(16) The information processing apparatus according to any one of (1) to (15), further including
   a microphone that acquires a speech of the user.
(17) An information processing method including:
   a speech recognition success/failure determination procedure that determines success or failure of speech recognition of a user's speech input;
   a normal response generation procedure that generates normal response information to be presented to the user in a case where it is determined in the determination that the speech recognition has succeeded; and
   an advice information generation procedure that generates advice information to be presented to the user in a case where it is determined in the determination that the speech recognition has failed due to a surrounding environment of the user,
   the procedures being executed by an information processing apparatus.
(18) A program that causes an arithmetic processor to implement:
   a speech recognition success/failure determination function that determines success or failure of speech recognition of a user's speech input;
   a normal response generation function that generates normal response information to be presented to the user in a case where it is determined in the determination that the speech recognition has succeeded; and
   an advice information generation function that generates advice information to be presented to the user in a case where it is determined in the determination that the speech recognition has failed due to a surrounding environment of the user.

### REFERENCE SIGNS LIST

1 Information processing system
1d Speech recognition success/failure determination unit
1e Advice information generation unit
1f Normal response generation unit
1g Response control unit
1h Response information presentation unit
2 Server device
3 User terminal
50 Map database

## Claims

1. An information processing apparatus comprising:
a speech recognition success/failure determination unit that determines success or failure of speech recognition of a user's speech input;
a normal response generation unit that generates normal response information to be presented to the user in a case where it is determined in the determination that the speech recognition has succeeded; and
an advice information generation unit that generates advice information to be presented to the user in a case where it is determined in the determination that the speech recognition has failed due to a surrounding environment of the user.

2. The information processing apparatus according to claim 1, further comprising
a response control unit that selects the normal response information in a case where a result indicating that the speech recognition has succeeded has been acquired as a result of the determination, and selects the advice information in a case where a result indicating that the speech recognition has failed has been acquired.

3. The information processing apparatus according to claim 2, further comprising
a response information presentation unit that presents information selected by the response control unit to the user.

4. The information processing apparatus according to claim 1, wherein
in a case where the speech recognition has failed, cause determination processing for determining a cause of failure is performed.

5. The information processing apparatus according to claim 4, wherein
in the cause determination processing, it is determined whether the failure is due to a way of utterance or due to noise.

6. The information processing apparatus according to claim 5, wherein
in the cause determination processing, in a case where it is determined that the failure is due to noise, it is further determined whether the noise is transient noise or non-transient noise.

7. The information processing apparatus according to claim 4, wherein
the cause determination processing uses a classifier.

8. The information processing apparatus according to claim 7, wherein
the classifier is generated by machine learning.

9. The information processing apparatus according to claim 4, wherein
the cause determination processing uses map data to determine a cause of failure.

10. The information processing apparatus according to claim 1, wherein
the advice information generation unit generates advice information that includes information for presenting a place to retry a speech input.

11. The information processing apparatus according to claim 10, wherein
in a case where a cause of failure of the speech recognition is non-transient noise, the place for retry is set to an alternative location different from a current location.

12. The information processing apparatus according to claim 10, wherein
in a case where a cause of failure of the speech recognition is transient noise, the place for retry is set to a current location.

13. The information processing apparatus according to claim 10, wherein
in a case where it is determined that a current location of the user is in an utterance restriction area, the place for retry is set to an alternative location different from the current location.

14. The information processing apparatus according to claim 10, wherein
the place for retry is determined by using map data.

15. The information processing apparatus according to claim 10, wherein
the place for retry is determined by using information regarding records of other users.

16. The information processing apparatus according to claim 1, further comprising
a microphone that acquires a speech of the user.

17. An information processing method comprising:
a speech recognition success/failure determination procedure that determines success or failure of speech recognition of a user's speech input;
a normal response generation procedure that generates normal response information to be presented to the user in a case where it is determined in the determination that the speech recognition has succeeded; and
an advice information generation procedure that generates advice information to be presented to the user in a case where it is determined in the determination that the speech recognition has failed due to a surrounding environment of the user,
the procedures being executed by an information processing apparatus.

18. A program that causes an arithmetic processor to implement:
a speech recognition success/failure determination function that determines success or failure of speech recognition of a user's speech input;
a normal response generation function that generates normal response information to be presented to the user in a case where it is determined in the determination that the speech recognition has succeeded; and
an advice information generation function that generates advice information to be presented to the user in a case where it is determined in the determination that the speech recognition has failed due to a surrounding environment of the user.
